# EUROPEAN PATENT APPLICATION

(11) **EP 4 465 650 A1**
(43) Date of publication of application: **20.11.2024**
(21) Application number: 23173540.8
(22) Date of filing: 16.05.2023
(51) Int. Cl.: H04N 23/90, H04N 23/45, H04N 23/69, H04N 23/698, H04N 17/00, H04N 13/00, H04N 13/246, H04N 13/296, G06T 7/70, G06T 7/80, G06T 19/00

(54) **CALIBRATION OF A MULTI-CAMERA CAPTURE SYSTEM**

(71) Applicant: Koninklijke Philips N.V., 5656 AG Eindhoven (NL)
(72) Inventor: VAREKAMP, Christiaan, 5656AG Eindhoven (NL); WILLEMS, Andreas Martinus Johannes, 5656AG Eindhoven (NL)
(74) Representative: Philips Intellectual Property & Standards

(57) **Abstract**

A method for calibrating a multi-camera capture system imaging a scene for 3D reconstruction of a target viewing space. The method comprises calibrating cameras in the capture system by iteratively obtaining a set of images from the cameras, wherein at least two images in the set of images correspond to different cameras, attempting to determine extrinsic parameters for the cameras based on the set of images and, based on the attempt to determine the extrinsic parameters, controlling a control system to adapt the pose of one or more of the cameras.

## Description

### FIELD OF THE INVENTION

The invention relates to the calibration of a multi-camera system. In particular, the invention relates to the calibration of a multi-camera system used for the purpose of 3D reconstruction.

### BACKGROUND OF THE INVENTION

One of the purposes of a three-dimensional (3D) multi-camera capture system is to allow novel view synthesis in a defined viewing space. A viewing space restricts the set of camera poses (position and orientation) for which a virtual camera view can be synthesized with a given minimum quality. For example, when a multi camera capture configuration consists of multiple cameras located on a line, with all cameras pointed in the same direction, the feasible viewing space will also restrict the virtual camera viewpoint close to that line and roughly directed in the same direction as the capture cameras.

The viewing space generally defines a portion of a scene for which 3D reconstruction at a minimum quality level is possible given the camera capture system.

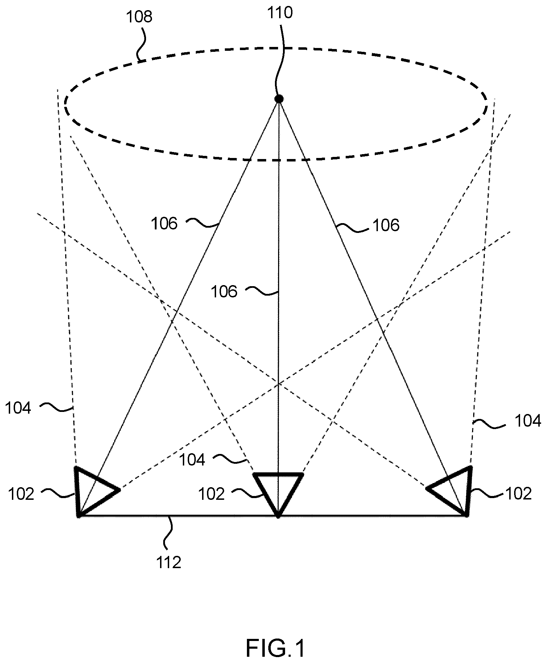

Fig. 1 illustrates three cameras 102 imaging a scene. In this case, the target viewing space 108 restricts a virtual camera to be positioned along line 112 or slightly away from this line and requires that the optical axis of the virtual camera to roughly intersect point 110. These restrictions are used to ensure that the whole scene can be rendered for any allowed viewpoint of the virtual camera. In this case, when the optical axes 106 of the cameras 102 intersect point 110, the fields of view 104 of the cameras 102 intersect each other enough for there to be a successful calibration.

Of course, many other viewing space definitions are possible, and their exact formulation will depend on the specific application.

For novel view synthesis, knowledge of the extrinsic parameters of the cameras is needed. Extrinsic calibration generally refers to finding the extrinsic parameters (i.e., the pose) of the cameras relative to each other. This is because knowledge of the poses of the cameras relative to each other enables the images captured with said cameras to be warped to novel viewpoints for novel view synthesis.

Calibration can be performed, for example, using structure from motion (SfM) algorithms. For example, in Fig. 1, if the images captured with the cameras 102 contain enough mutually matching visual features, then SfM will be successful and output the extrinsic parameters of the cameras.

In practice, given a target viewing space for a given application, the next step is to place a capture system (e.g., including cameras, depth sensors, etc.) to capture the scene. Defining the necessary number of capture cameras, optional depth sensors, and roughly positioning the cameras is often not difficult. However, precisely orienting or positioning the cameras is difficult to perform and maintain. Typically, an initial manual placement of cameras results in failure of the calibration step due to a lack of view overlap. The risk for this to happen increases with increasing focal length (decreasing field of view) because relative overlap between camera frustums will change more rapidly for larger focal length.

However, using an interactive manual re-orienting procedure is not practical. Another aspect of the camera configuration is that the sensors must be oriented such that virtual views can be synthesized for all points in a target viewing space with a minimum of missing data.

Thus, there is a need to improve the methods for calibrating cameras in a multi-camera capture system.

### SUMMARY OF THE INVENTION

The invention is defined by the claims.

According to examples in accordance with an aspect of the invention, there is provided a method for calibrating a multi-camera capture system imaging a scene for 3D reconstruction of a target viewing space, the target viewing space defining a portion of the scene for which 3D reconstruction is to be performed using images from the capture system, the capture system comprising two or more cameras and a control system for adapting the poses of the cameras, the method comprising calibrating the cameras by iteratively:
obtaining a set of images from the cameras, wherein at least two images in the set of images correspond to different cameras;
attempting to determine extrinsic parameters for the cameras based on the set of images; and
based on the attempt to determine the extrinsic parameters, controlling the control system to adapt the pose of one or more of the cameras.

This method provides an automatic calibration of the cameras. This enables the cameras to be initially placed almost arbitrarily (i.e., not very accurately) as the automatic calibration will adapt the poses of said cameras to enable a relatively quick calibration.

This method also enables quick and dynamic calibration of the cameras over time due to the speed at which the cameras can be calibrated. For example, when imaging a sports event, the cameras can be dynamically calibrated to follow a cluster of players. This would not be feasible using manual calibrations as there would not be enough time to calibrate the cameras as the players move.

The method is for calibrating the cameras to enable 3D reconstruction of a scene being imaged by the capture system. It will be appreciated that, as with most calibration methods, there may be a mismatch between the actual viewing space achieved post-calibration and the target viewing space used for the calibration. However, the method enables the actual viewing space to be close to the target viewing space.

It is noted that the poses of the calibrated cameras can be different to the poses used during the generation of an immersive video or, more generally, 3D reconstruction of the scene being imaged.

Preferably, adapting the pose of the one or more cameras comprises rotating one or more of the cameras. Translating the cameras can achieve camera calibration for 3D reconstruction, however it may not be as accurate or as quick as using rotations.

Extrinsic parameters may include the position and orientation of the cameras. The extrinsic parameters of a camera define a rotation and translation of a camera.

The viewing space may define a viewable space in an immersive video generated using images from the capture system.

The viewing space may define novel views which can be synthesized using images from the capture system.

It is noted that, in practice, attempting to determine extrinsic parameters may involve attempting to estimate extrinsic parameters. This is because it may only be possible to determine an estimate of the extrinsic parameters.

The method may further comprise, for the cameras for which extrinsic parameters were determined, controlling the control system to adapt the pose of said cameras based on the target viewing space.

For example, if the target viewing space defines a small area of the scene, the cameras for which extrinsic parameters have been determined can be rotated such that the optical axes of the cameras intersect at a single point in 3D space (e.g., at or near the center of the target viewing space).

In another example, the pose of the cameras can be adapted to attempt to image all of the target viewing space with at least two (or more) of the cameras. Of course, in practice it may not be physically possible to image all of the target viewing space with the available cameras. In these cases, the actual viewing space realized after the calibration may slightly differ from the target viewing space.

Adapting the pose of the cameras based on the target viewing space, after calibration, is for the purpose of 3D reconstruction.

Controlling the control system may comprise, for the cameras for which extrinsic parameters were not determined, controlling the control system to adapt the pose of said cameras by a pre-defined rotation and/or a pre-defined translation.

Adapting the poses using pre-defined rotations and/or translations can enable the extrinsic parameters to be determined in the subsequent iteration(s).

The pre-defined rotations may be relatively small. For example, the rotations may be smaller than 5 degrees, 10 degrees, 15 degrees, 20 degrees or 30 degrees. Of course, this may depend on the overall set-up.

The translations may also be relatively small. However, this may depend on the initial distance between the cameras. For example, the magnitude of the translations may be smaller than 5%, 10%, 20% or 30% of the distance between two adjacent cameras.

The pre-defined rotations and/or translations may be set by a user, or an algorithm, prior to the calibration or during the calibration. The pre-defined rotations and/or translations may be generated, for example, by a pseudo-random generator.

Obtaining a set of images from the cameras may comprise selecting images obtained from a set of cameras, wherein the set of cameras includes the two or more cameras or a subset of the two or more cameras, the subset comprising at least two cameras.

The calibration may comprises controlling the control system to adapt the pose of one or more of the cameras when extrinsic parameters are determined for at least one camera in the set of cameras and removing one or more cameras from the set of cameras for use in the subsequent iteration when no extrinsic parameters are determined.

Removing one or more cameras in the set of cameras, for the subsequent iteration, increases the chance that extrinsic parameters will be determined for at least one of the cameras.

In one example, an initial set of images may contain images from all of the cameras. If SfM fails for this subset, the set of images for the subsequent iteration can contain images from a minimum number of cameras (e.g., three or four cameras).

In the case where all subsets of cameras fail SfM, it is proposed to use larger changes in the poses of the cameras (e.g., larger rotations and/or larger translations) until SfM succeeds for the subsets using the minimum number of cameras.

The same set of cameras may be used in the subsequent iteration when no extrinsic parameters are determined for at least one camera in the set of cameras and when extrinsic parameters are determined for at least one other camera in the set of cameras.

In this case, the same set of cameras can be used. This is because the poses of the cameras may be adapted each iteration (e.g., using pre-defined rotations/translation) until extrinsic parameters are determined for all of the cameras in the set of cameras.

One or more cameras may be added to the set of cameras for use in the subsequent iteration when extrinsic parameters are determined for all the cameras in the set of cameras.

The capture system may comprise a focal length control for controlling the focal length of the cameras and the method may further comprise controlling the focal length control to decrease the focal length of one or more cameras before calibrating the cameras.

Starting with a short focal length for the cameras will ensure that there is more overlap between the cameras. Additionally, when using SfM to attempt to determine the extrinsic parameters, more corresponding features will be visible in the images, thereby increasing the probability that SfM will succeed and that extrinsic parameters will be output for the cameras.

Attempting to determine extrinsic parameters for the cameras may comprise inputting the set of images into an algorithm configured to attempt to determine extrinsic parameters for the input images.

The algorithm may be a structure from motion (SfM) algorithm.

Alternatively, or additionally, attempting to determine the extrinsic parameters may involve measuring the rotation and/or translation of a pose-adapting system (e.g., a motor) in the control system used to adapt the pose of the camera.

Alternatively, or additionally, markers placed in the scene being imaged by the multi-camera capture system can be used to attempt to determine the extrinsic parameters.

Various methods for attempting to determine the extrinsic parameters can be combined to provide more accurate extrinsic parameters.

SfM typically provides the most accurate changes in poses when compared to, for example, using a motor to measure the rotations achieved.

The invention also provides a method for calibrating a multi-camera capture system imaging a scene for 3D reconstruction of a target viewing space, the target viewing space defining a portion of the scene for which 3D reconstruction is to be performed using images from the capture system, the capture system comprising two or more cameras and a control system for adapting the poses of the cameras, the method comprising calibrating the cameras by:
controlling the control system to adapt the pose of one or more of the cameras over a plurality of pre-defined rotations and/or pre-defined translations;
obtaining a set of images from each camera with adapted poses, each set of images containing a plurality of images from various camera poses;
determining relative extrinsic parameters of the cameras with adapted poses using the corresponding set of images; and
determining extrinsic parameters for all of the cameras using the relative extrinsic parameters and images from all of the cameras.

The pose of one or more of the cameras can be adapted over a plurality of pre-defined rotations and/or pre-defined translations and each corresponding set of images, per camera, can be used to determine extrinsic parameters for each of the cameras with adapted poses. The rest of the cameras can then be calibrated using the known extrinsic parameters of the cameras with the adapted poses and images obtained from the rest of the cameras (e.g., using SfM).

The first step of determining extrinsic parameters, for the camera(s) with the adapted pose, provides relative extrinsic parameters (e.g., relative to an arbitrary origin which may be different for each camera).

The second step of determining extrinsic parameters, for all of the cameras, enables extrinsic parameters to be found for each of the cameras relative to each other.

The capture system may comprise a focal length control for controlling the focal length of the cameras and the method may further comprise controlling the focal length control to decrease the focal length of one or more cameras before calibrating the cameras.

Determining extrinsic parameters may comprise inputting the set of images into an algorithm configured to determine extrinsic parameters for the input images.

The algorithm may be a structure from motion (SfM) algorithm.

Alternatively, or additionally, determining the extrinsic parameters may involve measuring the rotation and/or translation of a pose-adapting system (e.g., a motor) in the control system used to adapt the pose of the camera.

Alternatively, or additionally, markers placed in the scene being imaged by the multi-camera capture system can be used to determine the extrinsic parameters.

Various methods for determining the extrinsic parameters can be combined to provide more accurate extrinsic parameters.

SfM typically provides the most accurate changes in poses when compared to, for example, using a motor to measure the rotations achieved.

The invention also provides a computer program carrier comprising computer program code which, when executed on a computer, causes the computer to perform all of the steps according to any of the afore-mentioned methods.

The computer program carrier may comprise computer memory (e.g., random-access memory), computer storage (e.g., hard drives, solid-state drives etc.). The computer program carrier may be a bitstream carrying the computer program code.

The invention also provides a system for calibrating a multi-camera capture system imaging a scene for 3D reconstruction of a target viewing space, the target viewing space defining a portion of the scene for which 3D reconstruction is to be performed using images from the capture system, the capture system comprising two or more cameras and a control system for adapting the poses of the cameras, the system comprising a processor configured to calibrate the cameras by iteratively:
obtaining a set of images from the cameras, wherein at least two images in the set of images correspond to different cameras;
attempting to determine extrinsic parameters for the cameras based on the set of images; and
based on the attempt to determine the extrinsic parameters, controlling the control system to adapt the pose of one or more of the cameras.

The system may further comprise the multi-camera capture system.

It will be appreciated that the processor may be configured to perform any of the steps of the methods described herein.

The processor may be configured to control the control system, for the cameras for which extrinsic parameters were not determined, by controlling the control system to adapt the pose of said cameras by a pre-defined rotation and/or a pre-defined translation.

The invention also provides a system for calibrating a multi-camera capture system imaging a scene for 3D reconstruction of a target viewing space, the target viewing space defining a portion of the scene for which 3D reconstruction is to be performed using images from the capture system, the capture system comprising two or more cameras and a control system for adapting the poses of the cameras, the system comprising a processor configured to calibrate the cameras by:
controlling the control system to adapt the pose of one or more of the cameras over a plurality of pre-defined rotations and/or pre-defined translations;
obtaining a set of images from each camera with adapted poses, each set of images containing a plurality of images from various camera poses;
determining relative extrinsic parameters of the cameras with adapted poses using the corresponding set of images; and
determining extrinsic parameters for all of the cameras using the relative extrinsic parameters and images from all of the cameras.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates three cameras imaging a scene;
Fig. 2 illustrates a multi-camera capture system with three cameras;
Fig. 3 illustrates the overlap in the fields of view of a multi-camera capture system;
Fig. 4 illustrates a multi-camera capture system with large differences in the directions of the cameras;
Fig. 5 illustrates an initial configuration for the multi-camera capture system of Fig. 4 suitable for calibration;
Fig. 6 illustrates a camera being rotated from the initial orientation to a final orientation;
Fig. 7 illustrates the difference between a wide, zoomed-out, field of view and a narrow, zoomed-in, field of view;
Fig. 8 shows a multi-camera capture system with focal length control; and
Fig. 9 shows a method for calibrating a multi-camera capture system imaging a scene for 3D reconstruction of a target viewing space.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for calibrating a multi-camera capture system imaging a scene for 3D reconstruction of a target viewing space. The method comprises calibrating cameras in the capture system by iteratively obtaining a set of images from the cameras, wherein at least two images in the set of images correspond to different cameras, attempting to determine extrinsic parameters for the cameras based on the set of images and, based on the attempt to determine the extrinsic parameters, controlling a control system to adapt the pose of one or more of the cameras.

It is proposed to provide a control system (e.g., a mechanical control system) for calibration, where the calibration (e.g., using SfM) and mechanical adjustments of camera poses are alternated in an iterative process to converge to an optimal orientation of each camera given a cost function that depends on the target viewing space. An example cost function could be the sum the shortest distances from the optical axes to a common 3D world point and minimize that sum.

The cameras, and optionally depth sensors, hence do not need to be placed very accurately. By iteratively alternating between small mechanical pose changes (e.g., rotations and/or translations) of the cameras and measuring the absolute orientation and position during calibration, the control algorithm can optimize the capture system for the given target viewing zone.

For a target viewing space with corresponding restrictions on the virtual camera, if applicable, a method for calibration may include the steps of attempting to determine the extrinsic camera parameters using the input camera images (e.g., using SfM) and determining camera adjustments based on the target viewing space. If restrictions on the virtual camera are set, the camera adjustments can be determined such that they satisfy the restrictions.

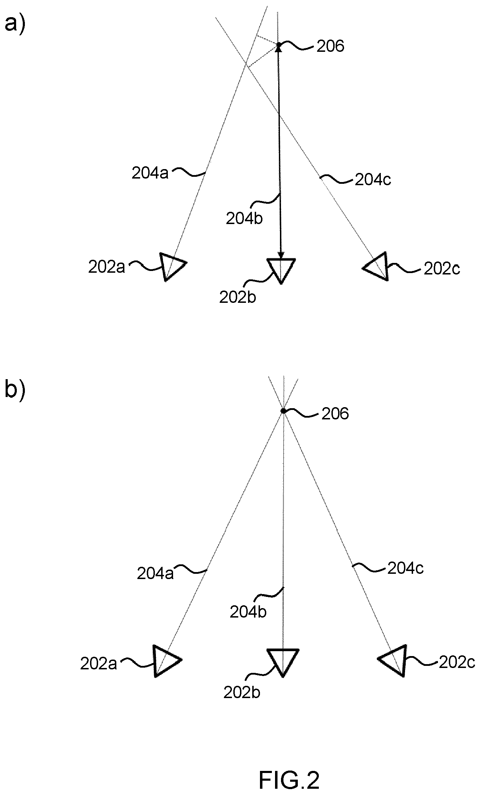

Fig. 2 illustrates a multi-camera capture system with three cameras 202a, 202b and 202c. Fig. 2a shows an initial configuration of the multi-camera capture system. In this example, the targeted viewing space may restrict the virtual camera viewpoint such that it must lie on a given line in 3D space. The virtual camera orientation is also restricted such that the optical axis intersects a single point 206 in 3D space. This single point 206 is, in this example, defined to lie on the optical axis 204b of camera 204 at a given distance. Assuming that the cameras 202a, 202b and 202c were placed on a line, the viewing space restrictions can be met by applying a rotation to cameras 202a and 202c such that the corresponding optical axes 204a and 204c intersect point 206.

Fig. 2b shows the multi-camera capture system after cameras 202a and 202c are rotated towards point 206. A control system can be used to mechanically adjust the orientation of the cameras 202a and 202c.

Determining the extrinsic parameters of the cameras using images requires sufficient overlap between views for a successful calibration. The reason for this is that accurate relative pose (rotation/translation) estimation requires corresponding feature points to be present in preferably all parts of each image. If views do not have sufficient mutual overlap, the calibration will fail to find an accurate solution or will not find a solution at all.

In particular, SfM algorithms require this overlap as they only use the images to determine the extrinsic parameters of the cameras. Thus, SfM can fail (i.e., not return extrinsic parameters) if there isn't sufficient overlap between the views.

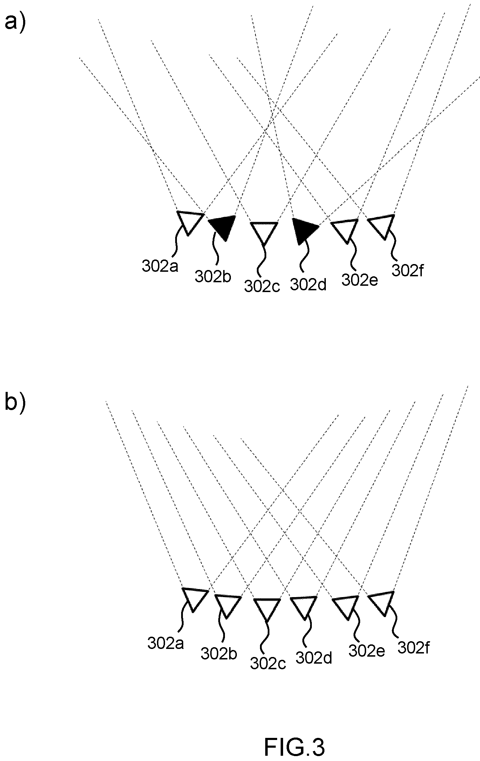

Fig. 3 illustrates the overlap in the fields of view of a multi-camera capture system. Fig. 3a illustrates the multi-camera capture system in an initial set-up without sufficient overlap in the fields of view. In particular, SfM would fail for cameras 302b and 302d due to lack of overlap. These two cameras (closed triangles) do not have sufficient overlap with other cameras for SfM to succeed (i.e., return extrinsic parameters). However, cameras 302a, 302c, 302e and 302f (open triangles) do have sufficient mutual overlap for extrinsic parameters to be determined.

In this case, cameras 302b and 302d can be rotated using a control system to provide sufficient overlap between cameras 302b and 302d and the rest of the cameras. This can be achieved by iteratively adjusting the pose of cameras 302b and 302d until SfM succeeds for all cameras.

Pre-defined rotations and/or translations are used to change the pose of the cameras 302b and 302d. This is because, in this case, there may be no information on the pose of said cameras. Additionally, the number of views used for calibration can be reduced for cameras 302b and 302d. For example, a subset including cameras 302a, 302b and 302c could be used to successfully calibrate camera 302b relative to the cameras in the subset. Similarly, a subset including cameras 302d, 302e and 302f could be used to successfully calibrate camera 302d relative to the cameras in the subset.

Fig. 3b shows the multi-camera capture system of Fig. 3a after cameras 302b and 302d have been rotated such that they overlap sufficiently for SfM to succeed. In the set-up of Fig. 3b, all views have sufficient mutual overlap for SfM to succeed in finding enough corresponding features to determine an accurate calibration. The example of Fig. 3 did not explicitly require the optical axis to mutually intersect. However, it will be appreciated that calibration between the cameras in Fig. 3 could also be successful if the additional requirement of mutual intersection in a single point (e.g., placed between cameras 302c and 302d at a given distance) had been given.

To handle potential SfM failure, the following algorithm is proposed:

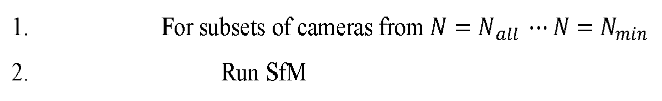

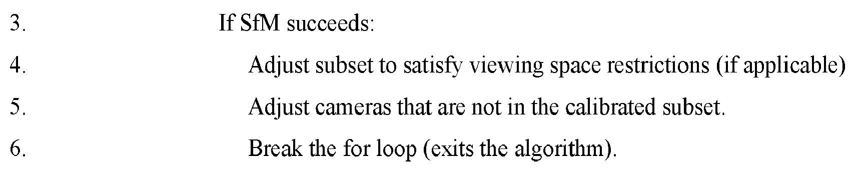

*Nₐₗₗ* is the total number of cameras in the multi-camera capture system. *Nₘᵢₙ* is the minimum number of cameras that is typically needed to obtain an accurate SfM calibration at all. The bundle adjustment step in SfM benefits from a larger number of cameras. A typical value for *Nₘᵢₙ* = 4.

This algorithm first tries SfM with all cameras but, if SfM fails, it tries increasingly smaller subsets of cameras until SfM succeeds with a smaller subset. When SfM succeeds, the subset of all 'successful' cameras is first (optionally) adjusted mechanically to satisfy restrictions set by the viewing space. After that, a search algorithm can be started for the cameras that could not be calibrated until all cameras can be successfully calibrated using SfM. The search algorithm for adjusting cameras that could not be calibrated works as follows:

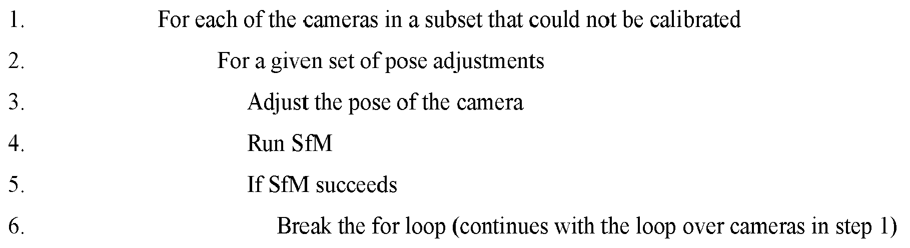

The search algorithm changes the pose of each camera and then tests whether SfM is successful. Note that adjusting the pose can include rotating and/or translating the camera.

A control system can be used to adapt the poses of the cameras. The control system may comprise a motor for each camera, the motors being configured to rotate the cameras. Additionally, or alternatively, the control system may comprise rails, or other components, which enable the cameras to be moved thereby changing the positions of the cameras. The control system may be configured to change the pose of one or more of the cameras in the multi-camera capture system.

An important aspect of the invention is that the pose of the cameras which enables successful calibration is not always an optimal pose for 3D reconstruction. For example, successful calibration can be achieved by ensuring all cameras are capturing the same portion of a scene. However, these capture camera poses can limit the viewing zone for a virtual camera. As such, once calibration is successful, the camera poses may need to be further adapted based on the target viewing space. This is particularly evident when the cameras are positioned with large mutual direction differences.

Large mutual direction differences between the cameras may cause issues during calibration. In particular, in outside-in looking viewing spaces where a scene is surrounded by imaging cameras, SfM (or other calibration methods) may fail due to a lack of overlap between views.

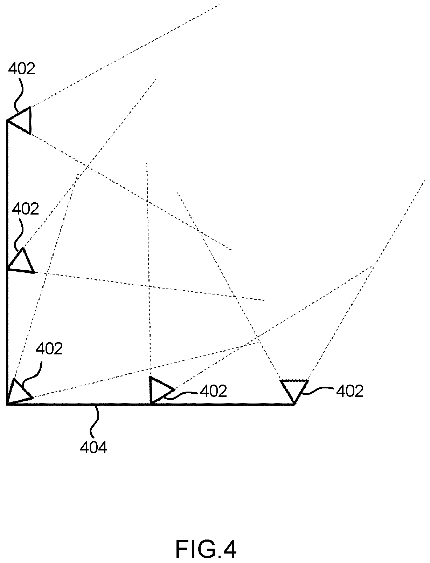

Fig. 4 illustrates a multi-camera capture system with large differences in the directions of the cameras 402. While the configuration shown in Fig. 4 is suitable for 3D reconstruction for a target viewing space restricting the virtual camera to line 404, the configuration it is not optimal for calibration due to the lack of overlap in the fields of view of the cameras.

A solution to this problem is to initialize the camera orientations differently but such that there is sufficient overlap between the fields of view.

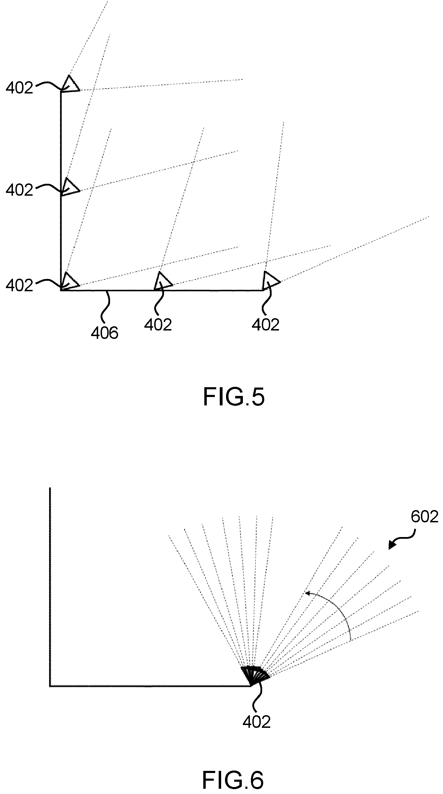

Fig. 5 illustrates an initial configuration for the multi-camera capture system of Fig. 4 suitable for calibration. This configuration provides more overlap between the cameras 402 compared to the configuration shown in Fig. 4. For each camera 402, a set of images can then be captured while rotating (or translating) each camera 402 to its intended end position (e.g., as shown in Fig. 4) for 3D reconstruction.

Fig. 6 illustrates a camera 402 being rotated from the initial orientation to a final orientation. Assuming that the captured scene is mainly static during the rotations, the set of images from each camera 402 can now be passed to SfM to determine relative extrinsic parameters. Each image in the set of images is captured at a different camera pose. When only small mechanical rotations are applied from one image to the next, the entire set can be used to accurately calibrate each camera separately with SfM. Images from all of the cameras, together with the now known relative extrinsic parameters, can then be passed to SfM to calibrate all of the cameras. As a result, the rotations will be known from the start to the end orientation for each camera.

An issue can also occur when using a tele-lens on the cameras. This causes a narrowing of the fields of view of the cameras which also reduces the overlap between cameras. This can lead to SfM (or other calibration techniques) failing. For instance, due to a narrow field of view, each camera captures a different background of a sports stadium and hence corresponding features may not be found, resulting in SfM failure.

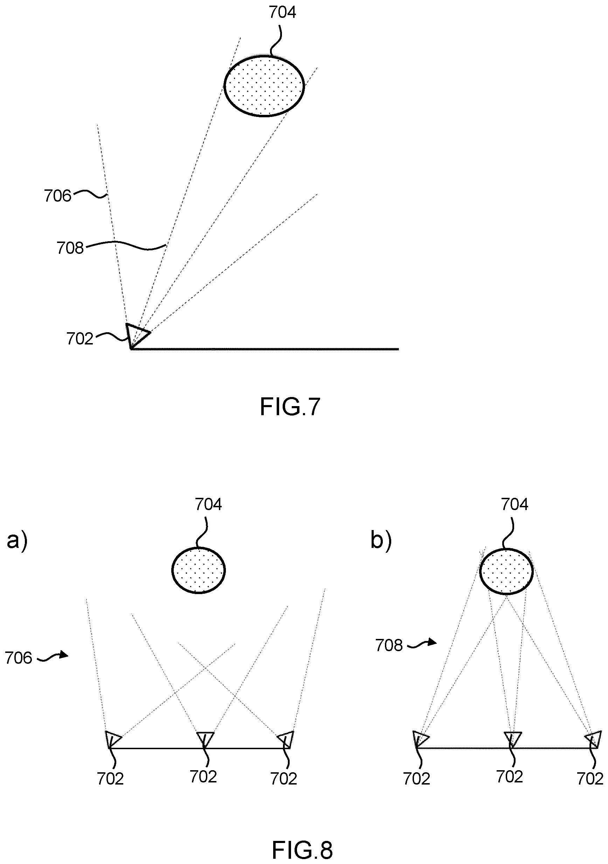

Fig. 7 illustrates the difference between a wide, zoomed-out, field of view 706 and a narrow, zoomed-in, field of view 708. In this scenario, the camera 702 is set up to capture an object 704. The narrow field of view 708 would provide a higher resolution for the object 704 and thus may be preferred for 3D reconstruction. However, in a multi-camera capture system, having multiple cameras with the narrow field of view 708 could lead to a failure of the calibration.

Thus, in these cases, a focal length control (e.g., controlled zoom lenses using a motor) can be used to adjust the focal length of the cameras prior to calibration.

Fig. 8 shows a multi-camera capture system with focal length control. Starting with a short focal length setting (wide field of view), enough corresponding features can be found for SfM to succeed. Fig. 8a shows the cameras 702 with a short focal length setting such that the wide fields of view 706 overlap sufficiently. After the poses of the cameras 702 are known, each camera can independently change the focal length to the target focal length by gradually changing focus and using image features to measure the exact change of focus. Note that, for this example, it may also be that pose parameters, such as rotations of the cameras, are adjusted prior to adjusting the focal length. This may be necessary to make sure that the fields of view have sufficient overlap after increasing the focal lengths. Fig. 8b shows the cameras 702 with a longer focal length such that the narrow fields of view 708 are focused on the object 704.

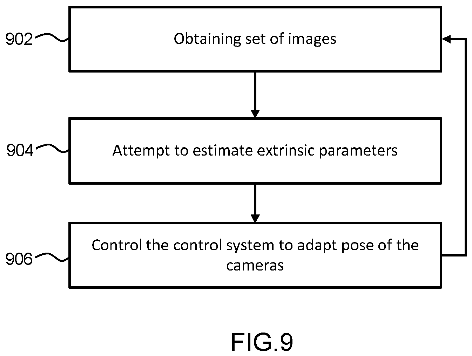

Fig. 9 shows a method for calibrating a multi-camera capture system imaging a scene for 3D reconstruction of a target viewing space. The capture system comprises two or more cameras and a control system for adapting the poses of the cameras. A set of images from the cameras is obtained from step 902, wherein at least two images in the set of images correspond to different cameras.

Optionally, the focal length of the cameras is reduced prior to obtaining the images to ensure a wide field of view and thus more overlap between the camera views.

Extrinsic parameters for the cameras are determined, or at least attempted to be determined, in step 904 based on the set of images. In some cases, it will not be possible to determine extrinsic parameters for one or more of the cameras using the given set of images. As such, based on the attempt to determine the extrinsic parameters, the control system is used to adapt the pose of one or more of the cameras in step 906.

Adapting the pose of the cameras may include rotating and/or translating one or more of the cameras by a pre-defined amount.

Steps 902, 904 and 906 are iteratively performed until calibration is successful.

It is noted that the calibration can be used for many applications of multi-camera capture systems. For example, an application of a multi-camera system other than novel view synthesis is 3D sports analytics, where novel view synthesis is not needed.

The skilled person would be readily capable of developing a processor for carrying out any herein described method. Thus, each step of a flow chart may represent a different action performed by a processor, and may be performed by a respective module of the processing processor.

One or more steps of any of the methods described herein may be performed by one or more processors. A processor comprises an electronic circuit suitable for processing data. Any method described herein may be computer-implemented, where computer-implemented means that the steps of said methods are performed by one or more computers and where a computer is defined as a device suitable for processing data. A computer may be suitable for processing data according to prescribed instructions.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

Any methods described herein exclude a method for performing mental acts as such.

## Claims

1. A method for calibrating a multi-camera capture system imaging a scene for 3D reconstruction of a target viewing space, the target viewing space defining a portion of the scene for which 3D reconstruction is to be performed using images from the capture system, the capture system comprising two or more cameras and a control system for adapting the poses of the cameras, the method comprising calibrating the cameras by iteratively:
obtaining (902) a set of images from the cameras, wherein at least two images in the set of images correspond to different cameras;
attempting (904) to determine extrinsic parameters for the cameras based on the set of images; and
based on the attempt to determine the extrinsic parameters, controlling (906) the control system to adapt the pose of one or more of the cameras.

2. The method of claim 1, further comprising, for the cameras for which extrinsic parameters were determined, controlling the control system to adapt the pose of said cameras based on the target viewing space.

3. The method of claims 1 or 2, wherein controlling the control system comprises, for the cameras for which extrinsic parameters were not determined, controlling the control system to adapt the pose of said cameras by a pre-defined rotation and/or a pre-defined translation.

4. The method of any of claims 1 to 3, wherein obtaining a set of images from the cameras comprises selecting images obtained from a set of cameras, wherein the set of cameras includes the two or more cameras or a subset of the two or more cameras, the subset comprising at least two cameras, and the calibration comprises:
controlling the control system to adapt the pose of one or more of the cameras when extrinsic parameters are determined for at least one camera in the set of cameras; and
removing one or more cameras from the set of cameras for use in the subsequent iteration when no extrinsic parameters are determined.

5. The method of claim 4, further comprising using the same set of cameras in the subsequent iteration when no extrinsic parameters are determined for at least one camera in the set of cameras and when extrinsic parameters are determined for at least one other camera in the set of cameras.

6. The method of claims 4 or 5, further comprising adding one or more cameras to the set of cameras for use in the subsequent iteration when extrinsic parameters are determined for all the cameras in the set of cameras.

7. The method of any of claims 1 to 6, wherein the capture system comprises a focal length control for controlling the focal length of the cameras, the method further comprising controlling the focal length control to decrease the focal length of one or more cameras before calibrating the cameras.

8. The method of any of claims 1 to 7, wherein attempting to determine extrinsic parameters for the cameras comprises inputting the set of images into an algorithm configured to attempt to determine extrinsic parameters for the input images.

9. A method for calibrating a multi-camera capture system imaging a scene for 3D reconstruction of a target viewing space, the target viewing space defining a portion of the scene for which 3D reconstruction is to be performed using images from the capture system, the capture system comprising two or more cameras and a control system for adapting the poses of the cameras, the method comprising calibrating the cameras by:
controlling the control system to adapt the pose of one or more of the cameras over a plurality of pre-defined rotations and/or pre-defined translations;
obtaining a set of images from each camera with adapted poses, each set of images containing a plurality of images from various camera poses;
determining relative extrinsic parameters of the cameras with adapted poses using the corresponding set of images; and
determining extrinsic parameters for all of the cameras using the relative extrinsic parameters and images from all of the cameras.

10. The method of claims 9, wherein the capture system comprises a focal length control for controlling the focal length of the cameras, the method further comprising controlling the focal length control to decrease the focal length of one or more cameras before calibrating the cameras.

11. The method of claims 9 or 10, wherein determining extrinsic parameters comprises inputting the set of images into an algorithm configured to determine extrinsic parameters for the input images.

12. A computer program carrier comprising computer program code which, when executed on a computer, causes the computer to perform all of the steps according to any of claims 1 to 11.

13. A system for calibrating a multi-camera capture system imaging a scene for 3D reconstruction of a target viewing space, the target viewing space defining a portion of the scene for which 3D reconstruction is to be performed using images from the capture system, the capture system comprising two or more cameras and a control system for adapting the poses of the cameras, the system comprising a processor configured to calibrate the cameras by iteratively:
obtaining (902) a set of images from the cameras, wherein at least two images in the set of images correspond to different cameras;
attempting (904) to determine extrinsic parameters for the cameras based on the set of images; and
based on the attempt to determine the extrinsic parameters, controlling (906) the control system to adapt the pose of one or more of the cameras.

14. The system of claim 13, wherein the processor is configured to control the control system, for the cameras for which extrinsic parameters were not determined, by controlling the control system to adapt the pose of said cameras by a pre-defined rotation and/or a pre-defined translation.

15. A system for calibrating a multi-camera capture system imaging a scene for 3D reconstruction of a target viewing space, the target viewing space defining a portion of the scene for which 3D reconstruction is to be performed using images from the capture system, the capture system comprising two or more cameras and a control system for adapting the poses of the cameras, the system comprising a processor configured to calibrate the cameras by:
controlling the control system to adapt the pose of one or more of the cameras over a plurality of pre-defined rotations and/or pre-defined translations;
obtaining a set of images from each camera with adapted poses, each set of images containing a plurality of images from various camera poses;
determining relative extrinsic parameters of the cameras with adapted poses using the corresponding set of images; and
determining extrinsic parameters for all of the cameras using the relative extrinsic parameters and images from all of the cameras.
